Europäisches Patentamt

(19) European Patent Office

Office européen des brevets

(11) Publication number: **0 039 712**
**B1**

(12) **EUROPEAN PATENT SPECIFICATION**

(45) Date of publication of patent specification: **03.09.86**

(51) Int. Cl.⁴: **H 02 K 41/00**

(21) Application number: **80902213.0**

(22) Date of filing: **14.10.80**

(86) International application number:
**PCT/US80/01369**

(87) International publication number:
**WO 81/01223 30.04.81 Gazette 81/11**

(54) **FLAT-COIL ACTUATOR ARRAY FOR MULTI-HEAD DISK DRIVE.**

(30) Priority: **18.10.79 US 85945**

(43) Date of publication of application:
**18.11.81 Bulletin 81/46**

(45) Publication of the grant of the patent:
**03.09.86 Bulletin 86/36**

(84) Designated Contracting States:
**DE FR GB NL**

(56) References cited:
**EP-A-0 011 149**
**FR-A-2 149 610**
**GB-A-1 373 539**
**US-A-3 136 934**
**US-A-3 353 131**
**US-A-3 416 535**
**US-A-3 924 146**
**US-A-4 024 552**
**US-A-4 051 398**
**US-A-4 075 517**
**US-A-4 079 400**
**US-A-4 132 910**
**US-A-4 227 100**

(73) Proprietor: **BURROUGHS CORPORATION (a Michigan corporation)**
**Burroughs Place**
**Detroit, Michigan 48232 (US)**

(72) Inventor: **Fransden, Jorgen**
**13617 West 137 Street Place**
**Burnsville, Minnesota 55337 (US)**

(74) Representative: **Kirby, Harold Douglas Benson et al**
**G.F. Redfern & Company Marlborough Lodge 14 Farncombe Road**
**Worthing West Sussex BN11 2BT (GB)**

(56) References cited:
**FEINWERKTECHNIK + MICRONIC, vol. 77, no. 4, May/June 1973 Münich, DE O.E. OLBRICH: "Aufbau und Kennwerte elektrodynamischer Linearmotoren als Positionierer für Plattenspeicher", pages 151-157**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the Invention

This invention relates to novel improved electromagnetic actuator assemblies and in particular to such assemblies implemented with "flat-coil" means and adapted for reciprocating magnetic transducer means relative to magnetic recording surfaces.

Computer memories of the type employing one or several magnetic disk files for recording and storing data are widely used in data processing; e.g., as peripheral memory. Disk files have the advantage of facilitating data transfer at randomly selected address locations (tracks) and without need for the "serial seek" mode characteristic of magnetic tape memories.

As workers are aware, the transducers used in association with disk recording surfaces must be reciprocated very rapidly between selected address locations (tracks) with high precision. It will be recognized as important for such a system to move a transducer very rapidly between data locations; and to do so with high positional accuracy between closely-spaced track addresses. This constraint becomes very tricky as track density increases — as is presently the case. Typically, such disk storage systems mount the transducer head on an arm carried by a block that is supported by a carriage. This carriage is usually mounted on track ways for reciprocation by an associated transducer actuator.

Workers will recognize that the present trend is toward ever higher track density with increased storage capacity and decreased access time. Of course, as track density rises, closer control over the actuator mechanism is necessary to position transducer heads accurately over any selected track, lest signals be recorded, or read, with too much distortion, and without proper amplitude control, etc.

— Known Positioners:

Such transducer actuators (linear positions) employed with magnetic disk memory systems are subject to stringent requirements; for instance, these systems typically involve a stack of several magnetic disks, each with many hundreds of concentric recording tracks panning a radius of about 30 cm; and a head-carrying arm is typically provided to access each pair of opposing disk surfaces. This arm will typically carry two to four heads so that it need be moved only about 7.5 cm (radially) to position its heads adjacent any selected track. Thus, it will be appreciated that such applications involve extreme positioning accuracy together with very high translation speeds (to minimize access time — a significant portion of which is used for head positioning). Such a positioner must move its transducer heads very rapidly so that the associated computer can process data as fast as possible — computer time being so expensive that any significant delay over an extended period (of even a fraction of a millisecond) can raise costs enormously ("transition time," during which heads are moved from track to track, is "dead time" insofar as data processing is concerned, of course). Thus, computer manufacturers typically set specifications that require such inter-track movements to take no more than a few milliseconds. Such high speed translation imposes extreme design requirements: it postulates a powerful motor of relatively low mass (including carriage weight) and low translational friction.

Another requirement for such head postioners is that they exhibit a relatively long stroke, on the order of 2.5 cm—10 cm or more, in order to minimize the number of heads rquired per recording surface [pair].

The prior art discloses many such positioner devices, including some intended for use in magnetic disk memory systems: e.g., see U.S. Patents 3,135,880; 3,314,057; 3,619,673; 3,922,720; 4,001,889; 4,150,407; 3,544,980; 3,646,536; 3,665,433; 3,666,977; 3,827,081; and 3,922,718 among others.

Workers recall that such actuator carriages are driven by various actuator mechanisms, including the well known "voice coil" motor (VCM, comprising a solenoid like those used to drive an audio speaker). That is, the magnetic heads are carried by a sliding carriage driven by a VC electric motor including a mobile electric coil positioned in a magnetic field and fed by a current of variable intensity and polarity. This magnetic field is typically established by permanent magnet means disposed about the movable coil. Such a VC linear positioner can exhibit certain disadvantages — for example: excess mass and associated excess power requirements; and drive and control circuitry which is unduly-complicated. That is, such actuators typically involve a relatively heavy carriage; accordingly a lot of inertia must be overcome each time the carriage is accelerated from rest. This acceleration must be maximized to minimize access time. Thus, a great burden is placed upon the power requirements to the voice coil to provide the necessary high acceleration. Such VC actuators are not particularly efficient in converting electrical power either; also they typically require relatively complicated drive and control circuitry to effect the requisite precise positioning despite high accelerations.

Fig. 11 thus represents a conventional moving coil, magnetic actuator (VCM) very schematically shown (see also Fujitsu Scientific and Technical Journal June 1972, page 60 and following). Here a moving coil (armature) C will be understood as mounted upon a movable bobbin adapted to reciprocate along the core portion $M_c$ of an E-shaped magnetic circuit M, including opposing poles P connected by yoke section Y. Such reciprocation will be responsive to electric current through coil C as is well known in the art [cf. force being the product of flux density, coil length and coil current: $F = BLI$].

Workers are aware that, since the flux return path traverses the cross section of core $M_c$, then in certain instances actuator efficiency and the upper limit of operation will be affected by "flux saturation" at this relatively narrow piece — whereby an increment in coil current fails to produce a proportionate significant increase in actuator force. One might even say that such incremental current and flux is "wasted." Flux may also be deemed "wasted" insofar as the flux return path traverses yoke portion Y (an "open-loop" flux) rather than moving through the "working gap" between coil C and (the inner facing surfaces of) poles P (in a "closed-loop").

In an article by O.E. Olbrich in Feinwerk-technik + micronic, volume 77, number 4, May/June 1973, Munich, Olbrich discloses a linear actuator operating between opposed pole pairs for positioning a plural head array on a disk pack. Olbrich's actuator comprises a plurality of individually operable spaced coils on a substrate. Olbrich shows no way in which his heads can be independently positioned.

UK Patent Application No. 1 373 539 discloses the use of offset coils on a common substrate where the width of the coils is equal to the pitch between opposed magnetic fields. The UK Application does not disclose any method for positioning a plurality of positionable loads at the same time, nor does it disclose any method for minimising external flux leakage to the positioning array.

US Patent No. 4 075 517 discloses a plural actuator array wherein more than one set of heads in a disk drive can be independently positioned. The US Application does not disclose an apparatus wherein the characteristics of the positioner for each head set are the same, and the number of individual positioners is limited by the manner of construction. The apparatus disclosed shows actuators which are clearly not stackable and which slide within one another in a manner likely to cause mounting and clearance problems.

United States Patent 3,416,535 discloses an automatic record card ejection system where each record card comprises a single planar coil which is selectably energised if a predetermined set of electrical conductors engaging coded sliding electrical contacts on the card is provided with D.C. current. When the card is in an unejected home position the coil on the card is in a magnetic path comprising two opposed pairs of magnets with one pair providing a magnetic field in a first sense on the leading portion of the coil and the other pair providing a magnetic field in the opposite sense on the trailing portion of the coil for the two portions of the coil and the two magnetic fields to co-operate to provide an enhanced force. The card is ejected from a magnet assembly magazine until the sliding contacts are broken. Many cards can be held in one magazine and magazines can be stacked in plural array one above the other using magnets in common between adjacent magazines. The present invention seeks to provide improvement over such a system by providing a system of planar slides each in its own portion of a stacked magnet assembly and each independently used to position one or more respective heads in a disk data store. The present invention further seeks to provide improvement over a system as disclosed in United States Patent 3,416,535 by providing plural sets of two opposed magnet pairs along the path of movement of each slider and by providing in each slider a pair of longitudinally separated selectably energisable coils for the selection of the coil and its selected sense of energisation to provide an extended bi-directional linear position control for each slider, each slider having electrical connection maintained thereto along the whole of its path.

French Patent 2,149,610 discloses the use of a plurality of coils on a flat former where the current in the coils is commutated to impart translation to the former in a magnetic field which reverses along the length of that translation to have regions in first and second opposed senses cutting the coils; and where a stacked array of flat formers turning a common shaft comprises magnets therebetween in a plurality of aligned sets for the magnets in one set to assist every other magnet in that set. The present invention seeks to provide improvement thereover by providing that each and every former is independently operable and is not required to work in unison with others to move a common load as disclosed in FR 2.149.610. The present invention further seeks to provide improvement thereover by utilising the flat former in each instance to support a plurality of flat coils with a first leading portion in a magnetic field in a first sense and a second trailing portion in a magnetic field in the opposite sense for the fields and windings of the flat coils to assist in creation of an enhanced force. The present invention further seeks to ·provide improvement thereover by providing that the flat former is utilised in a linear positioning apparatus having a plurality of magnet pairs strung along the path of translation as opposed to the circular repetitive motion disclosed in FR 2.149.610. The present invention yet further seeks to provide improvement by allowing direct support of its load upon the flat former as opposed to the use of an intermediate shaft disclosed in FR 2.149.610.

The present invention consists in a magnetic linear actuator assembly for controlling the position of a plurality of heads to lie at selectable radii on a plurality of disks, said assembly comprising an actuator comprising: a planar armature for positioning a particular head mounted to move along a linear path; a magnet group disposed along said linear path to provide a first magnetic field in a first sense transverse to said linear path in a first region of said linear path and a second magnetic field, in a second sense opposed to said first sense, in second region of said linear path adjacent to said first region; and a plurality of overlapped flat coils on said armature spaced from one another along said linear path and each having their plane parallel to said linear path, each coil having an extent along said linear path equal to the pole pitch between said first and second regions for the current in said each coil to co-operate both with said first magnetic field and with said second magnetic field to produce a displacing force in the same direction; where each one out of said plurality of coils on said armature is chosen in turn for the provision of current thereto for the amount of force exerted on said armature to be independent of the position of said armature along said linear path: said assembly being characterised by said plurality of flat coils comprising a pair of flat coils relatively displaced along said linear path; by said actuator, comprising a plurality of said magnet groups adjacent to one another along said linear path to provide magnetic fields of alternate senses transverse to said linear path in alternate adjacent regions of said linear path; by said armature being translatable along said linear path over an extended range by the repeated application of a control sequence consisting in energising a first coil in said pair of coils with electrical current in a first sense to control said armature over a first portion of said linear path, energising a second coil in said pair of coils with electrical current in said first sense to control said armature over a second portion of said linear path adjacent to said first portion, energising said first coil with electrical current in a second sense, opposite to said first sense, to control said armature over a third portion of said linear path adjacent to said second portion, and energising said second coil with electrical current in said second sense to control said armature over a fourth portion of said linear path adjacent to said third portion; and by said assembly comprising a plurality of said actuators in stacked array each independently operable to positioning a respective particular head, said magnetic fields in said first sense assisting one another by being aligned between adjacent ones of said stacked plurality of actuators in said array and said magnetic fields in said second sense also assisting one another by being aligned between adjacent ones of said stacked plurality of actuators.

In accordance with one salient feature of the present invention, such an assembly is formed to comprise a "flat-coil" carriage. In one embodiment, the "carriage" is comprised of a thin, planar frame, or mandrel, on which flat-wire loops are laid — this replacing the conventional VCM core as well as its coil and bobbin. In such an arrangement, more of the flux return path lies across the "working gap," so that more return flux participates as "working flux." This dispenses with the usual tubular bobbin in favor of a flat mandrel support for the coil loops.

As seen hereafter, it will be readily apparent to workers how such a "flat armature" (flat support/flat coil) provides the moving coil structure for an improved linear actuator, compressing it and flattening it out, as well as facilitating a great reduction in mass and volume. Such an improved armature will be seen to give superior performance, e.g., as disk head positioner with "closed loop" flux as compared with a VC motor. Now, while others have suggested the use of related coil structures which are somewhat flat, thin and planar, no one has combined such with a linear array of permanent magnets (pole pairs) as further described below.

In accordance with another salient feature, such linear positioners are taught in operative combination with a disk drive arrangement. Thus, such a "flat armature" is applied to replace the typical bobbin coil and magnet of a voice coil actuator.

Such a flat coil actuator array is provided in integral relation with a direct-access disk drive apparatus. In such an apparatus the linear positioning "flat armature" operates responsive to electrical signals to its coils, causing it to carry heads between disk track addresses. Such a "flat armature" positioner will be understood and described below as comprising a movable, planar non-magnetic frame on which coils are disposed, this frame being adapted to be reciprocated along the "magnet gap" between an array of stationary permanent magnet means responsive to certain current through the coil windings.

Thus, an electrical address signal to the coils may be directly converted into linear actuator motion providing high speed head translation. Such an "armature" will be seen to eliminate much unnecessary mass and reduce associated power and actuator volume. By this feature, the "flattened bobbin" becomes the carriage frame for carrying a set of recording heads and eliminates all intermediate means and their associated mass and complications.

In a related feature, it will be seen that such "flat armature" positioners, being configured to fit within the cross-section of a typical inter-disk gap, lend themselves to "modular" disk drive design — whereby individual head mounting arms and positioners and their associated positioning drive means and controls may be individually provided and made sufficiently independent to be added, or subtracted, virtually at will — as compared with conventional disk drive positioner arrays wherein the actuator arms, etc., are mounted and/or driven and controlled as a multi-arm assembly (the basis for the "cylinder" concept of disk pack data organization). Workers will readily recognize the freedom of design and/or retro-fit provided by such a modular concept.

Such a "modular" design also simplifies the provison of servo electronics for various disk drives having a different number of disks — for instance, a manufacturer may offer a "two-disk"-, "four-disk"- and "eight-disk"-drives; yet he can use the same positioner and servo control assemblies in all variations; where before he would typically have to design and supply three different actuator and associated control arrangements.

Thus, one object of this invention is to provide the mentioned and other features and advantages. Another object is to teach the use of such "flat actuators" in actuator assemblies, which are adapted for positioning heads in a disk drive. A related object is to adapt actuator cross-section to that of the inter-disk gap — providing a "planar actuator" for "planar gaps;" and teaching the use of flat actuator coils able to penetrate such gaps. Another object is to provide such "flat coil" actuators with a high percentage of useful magnetic flux.

A further object is to provide multi-arm disk drive positioners which are "modular."

Another object is to "miniaturize" head actuators for disk drives; a related object is to reduce their cost, weight and power consumption, while improving acceleration.

An object of one embodiment of the invention is to teach the advantageous use of one or more transducer actuators and assemblies per gap pair (i.e., per pair of recording surfaces).

Another object thereby is to teach the establishment of modules of disk surfaces and associated dedicated transducer assemblies, whereby system expansion or contraction is simplified. Yet a further object is to teach the use of such modules with independent transducer control whereby transducers can be operated independent and in parallel (e.g., one engaged in "read/write" while one or several others are "seeking" their next read/write address; or some heads positioned over oft-used tracks while others "seek" randomly).

An object of another embodiment is to do so providing "multiple paths to data" (multi-port flexibility), with multiple transducer assemblies arranged to cover the same addresses, at least optionally. A further object is to reduce the number of heads per actuator (e.g., thus reducing relative "offset"; also, facilitating lower power consumption, with less mass to translate; also break-down actuator/head "coverage" with relatively few tracks per actuator (per head).

Thus, according to one general aspect, the invention may be viewed as a linear actuator arrangement comprising flat elongate planar carrier arm with one or several coils and one or more transducer means disposed thereon and adapted to be reciprocated along a linear path in the plane of this arm, and with permanent magnet means disposed along this path adjacent the coils. For example, as seen below, such an arrangement may comprise a multi-arm, multi-head positioner arrangement which is operatively associated with a disk pack. Here, the term "transducer" may be understood as directed to any transducer, or head, adapted to receive data signals to be recorded on a medium or to be read therefrom.

Workers will be surprised how thin an actuator can be using the techniques hereinafter described (e.g., a thickness of about 1.9 cm for an armature is readily achieved using 1.6 mm PC board with copper cladding, an actuator further comprising a pair of 1.3 cm thick magnets each on a 1.6 mm steel sheet and each leaving an air gap of about 2.5 mm).

Workers will further appreciate how compact, light and advantageous staggered multi-turn actuator coil array fabricated as hereinafter described can be. For instance, when provided for use with a typical stack of magnetic recording disks, each such actuator is able to service the gap between adjacent disks in the stack; while stacked sets of such actuators can be grouped in modules wherein a common magnetic housing and circuit is provided (between common magnetic shunts).

With the present invention practised as hereinafter described using common shunts and rare earth-cobalt magnets in such an array (enabling the use of a 90 gm actuator) and with a gap magnetic flux of about 0.4 Tesla, a very surprisingly low external flux leakage has been observed in the region of $5 \times 10^{-4}$ Tesla at 1.9 cm away from the actuator assembly as opposed to that for an ordinary Voice Coil (VC) motor similarly used which typically provides about $5 \times 10^{-4}$ Tesla at a distance of about 18 cm from it. Also, the force constant (gms/amp in the coils) is remarkably invariant with displacement. For preference, the coils can be "reverse-wound" and connected at centers. The magnetic flux loops in each actuator array are observed to be advantageously concentrated between adjacent pairs of opposed-polarity magnets and magnetic keepers or end plates for the magnetic potential (M.P.) to be zero at the tip, bottom and center of the array.

Embodiments like that hereinafter indicated can have a total moving mass (as above described) of as little as 90 grams this comprising the actuator strip, or PC board, pair of head assemblies, and pair of R/W integrated circuits, along with the four sets of double bearings, or rollers.

The use of a "flat armature" linear positioner as hereinafter described simplifies the moving coil structure, compressing it and flattening it out, as well as making it possible greatly to reduce mass and volume when comparison is made to the equivalent use of a VC motor with its "open" (air traversing) flux path. Such a "flat coil" actuator will also be seen as allowing for a relatively unlimited stroke length limited only by the number of magnets strung out along the actuator path, thus facilitating miniaturization and compression of an actuator stack and further allowing one simplified actuator between each pair of recording disk surfaces. The flat shape of each actuator allows for the close and intimate stacking of actuators in a surprising novel manner.

Brief Description of the Drawings

The foregoing, and other related objects, features and advantages of the present invention will be better appreciated by workers as they become familiar with the following detailed description of presently preferred embodiments, these being considered in conjunction with the accompanying drawings, wherein like reference indicia denote like elements:

Fig. 1A is a perspective schematic partial view of an improved disk drive embodiment with several multi-actuator module embodiments, these shown in partly-disassembled perspective view in Fig. 1B and in a functional side section in Fig. 2, and very schematically in the front perspective in Fig. 3 and the rear perspective in Fig. 4;

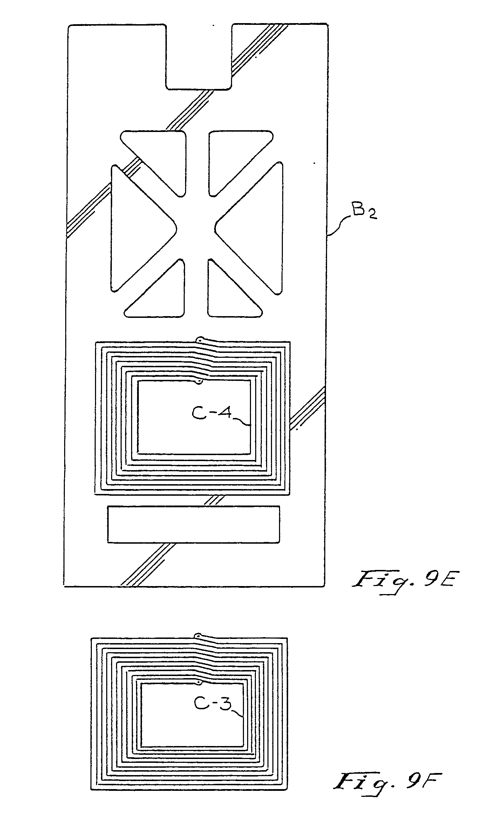

Fig. 5 shows an upper perspective view of one actuator embodiment of the type referenced above; while Fig. 6 shows the assembly in side sectional view;

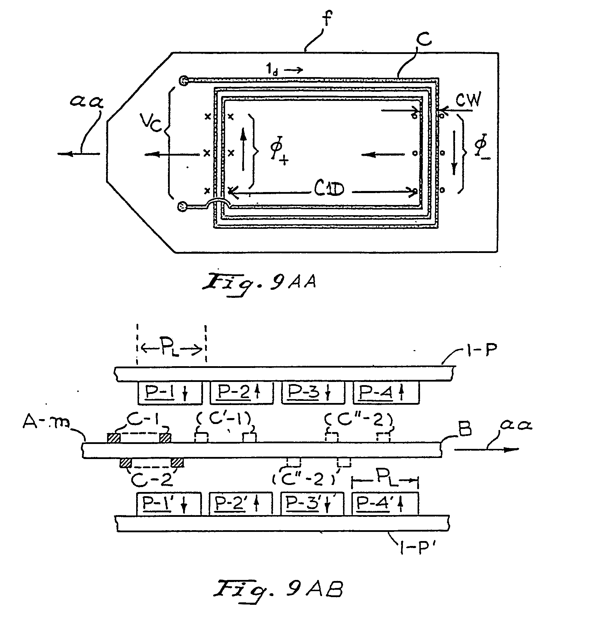

Fig. 7 shows a single actuator of the type in Figs. 5 and 6, as mounted for rolling reciprocation, while Fig. 8 shows this in frontal section and Fig. 9A shows individual actuator elements exploded-away vertically, these elements being separately shown in Figs. 9B, 9C, 9D, 9E and 9F;

Fig. 9AA is a functional plan view showing of a typical coil for such an actuator and Fig. 9AB is a schematic side view of such an actuator in the manner of Fig. 6;

Fig. 10 is a plot of typical variations of actuator position with (magnetic) translational force;

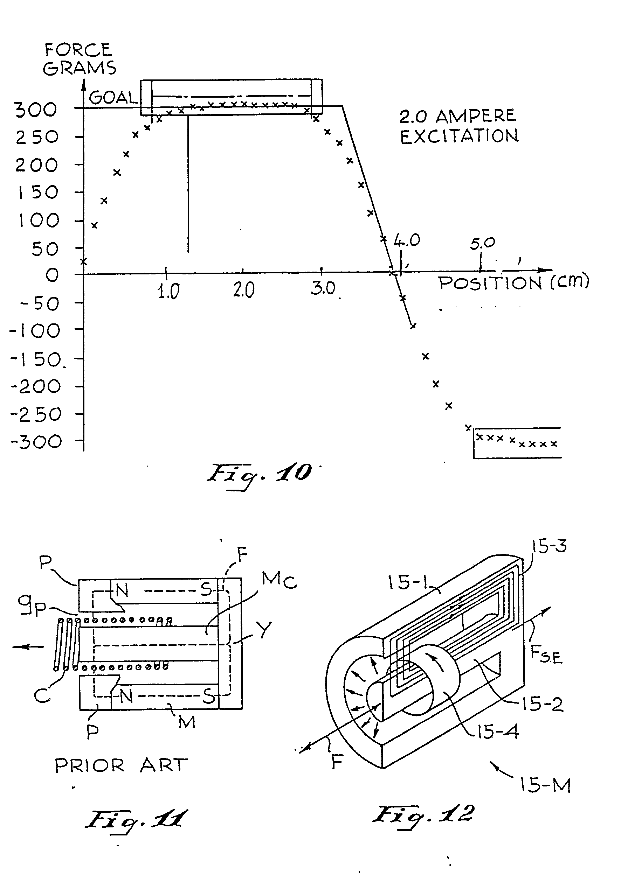

Fig. 11 is a very schematic side section of a prior art "voice coil" type actuator shown in Fig. 12 in partial end perspective; while Fig. 13 is a like view of related portions of a "flat coil" actuator according to the invention;

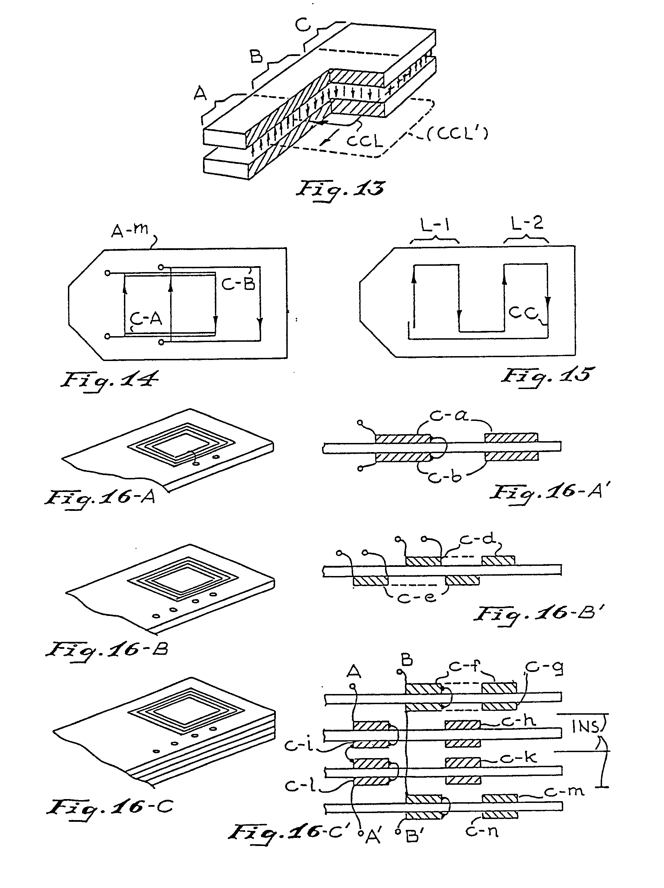

Fig. 14 is a very schematic plan view of a flat actuator according to the invention to functionally indicate current polarity; with an alternate coil arrangement being shown in Fig. 15 and with related differently-connected coil arrays being shown in partial perspective and side view in related Figs. 16A/16A'; 16B/16B' and 16C/16C';

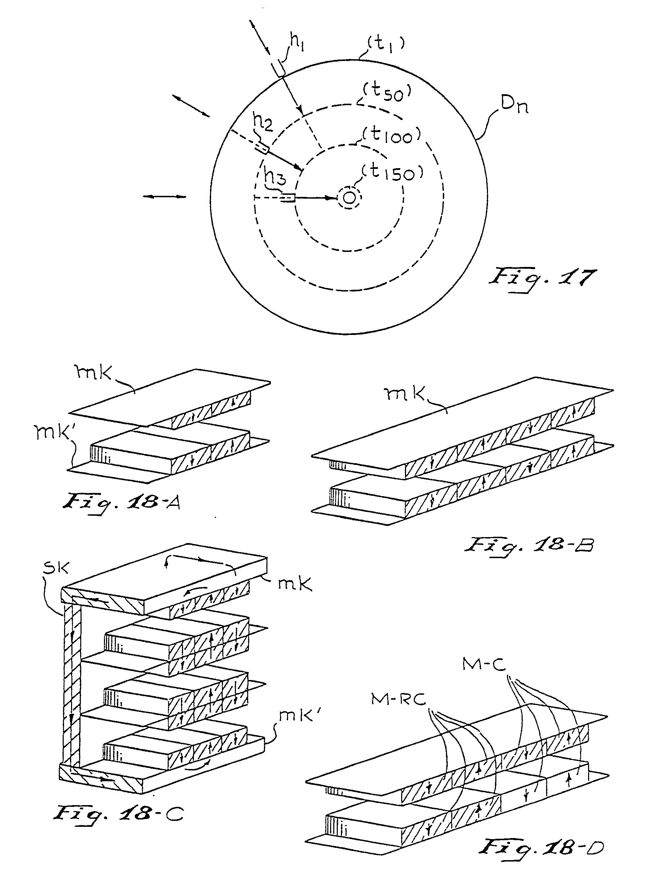

Fig. 17 is a very schematic plan view of a magnetic recording disk with a functional indication of an "overlapping head"-track coverage technique useful with the present invention;

Figs. 18A through 18D show, after the manner of Fig. 5B different arrays of permanent magnets varied in both the horizontal and vertical direction;

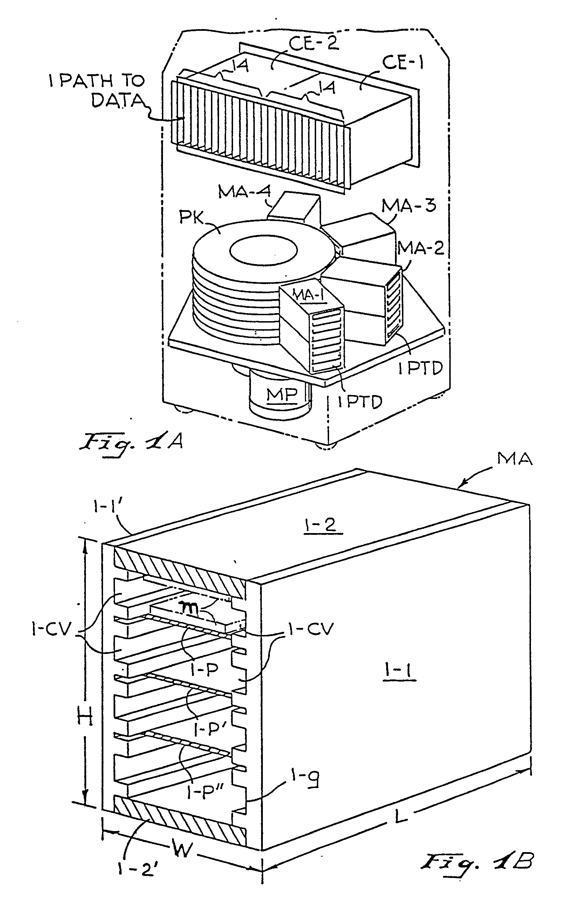

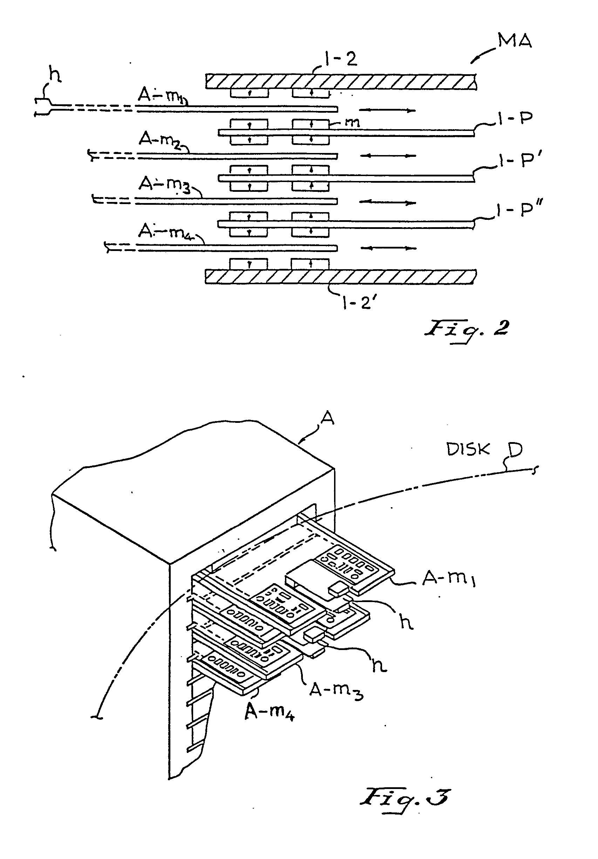

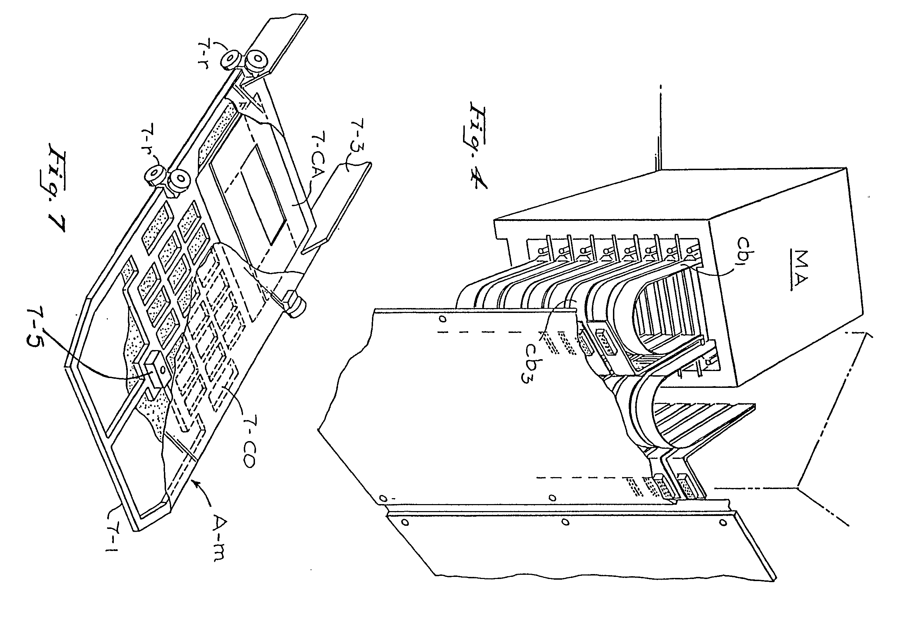

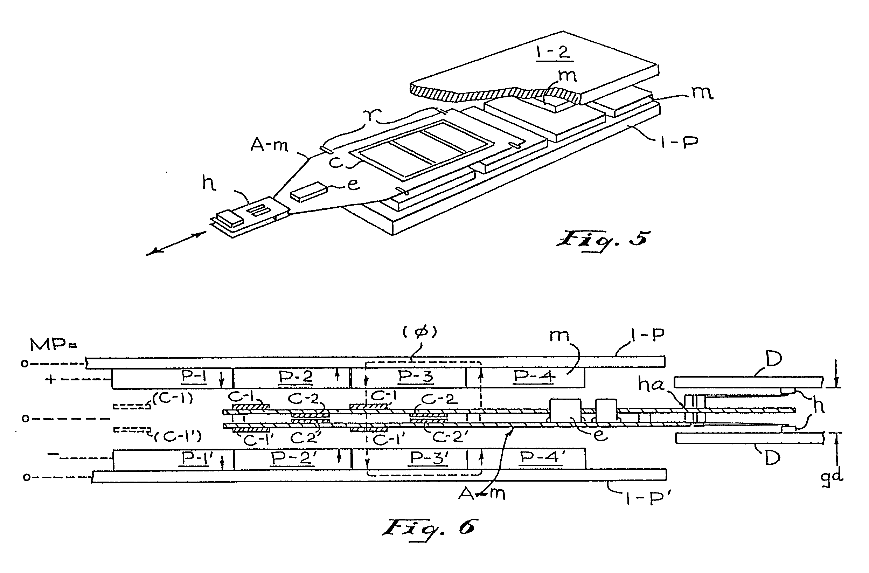

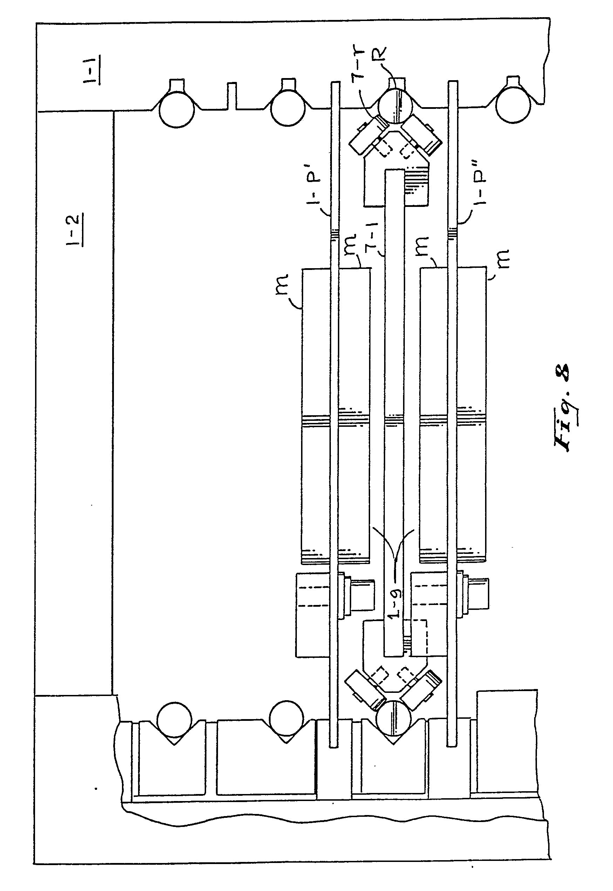

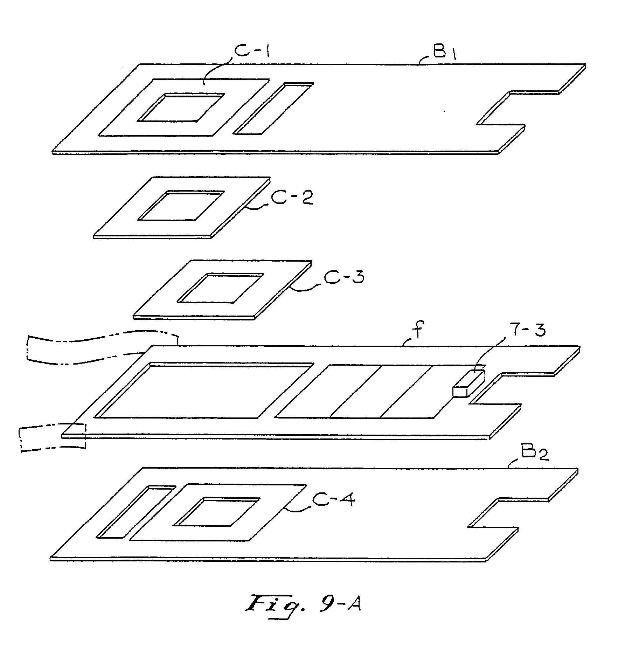

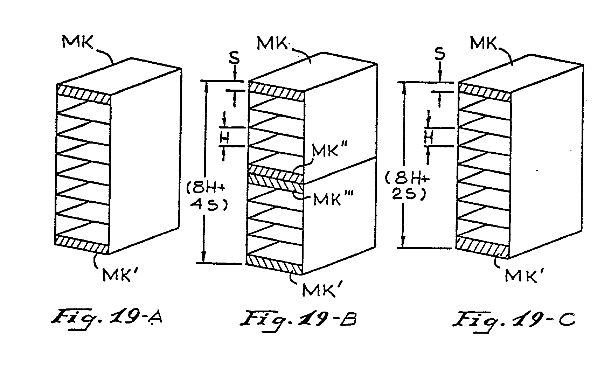

Figs. 19A through 19C show variations, after the manner of Fig. 1B, of differently arranged stacks of actuator compartments; and

Fig. 20 is a side schematic perspective of a modification of the present flat coil actuator used to drive a plurality of positioner arms rather than a single arm as in the prior embodiments.

Description of Preferred Embodiments

Fig. 1A is an idealized perspective view of salient portions of a novel "dual-path" disk drive comprising a rotatable multi-disk pack Pk arranged to be controllably rotated, e.g., by motor $m_p$, and otherwise operated relatively conventionally, except that it is operatively associated with a plurality of like actuator modules MA to be described hereafter. According to one feature hereof, this arrangement comprises a first stack of actuators MA-1 comprising 16 identical stacked actuators ("odd gap" stack) each designed to service one of the odd-numbered gaps in the 64 disk stack Pk, while a like "even stack" MA-2 comprises similar array of actuators, each designed to service one of the even-numbered gaps. Workers will appreciate that, here, two stacks rather than one are shown, this illustrating a feature of convenience with the invention. That is, rather than being stacked in a single vertical array, the flat coil actuators according to the invention are preferably broken up and organized into two stacks (as here) or into four stacks, etc., etc., as one may prefer.

According to a related feature, each of these stacks MA-1, MA-2 is replicated in a second set: "even stack" MA-3 and second "odd stack" MA-4, these equivalent to MA-1, MA-2, respectively, except that where the first two stacks cover the outer disk tracks principally, the second stack pair are designed to cover the inner (half of the) disk tracks. As a supplemental feature, all stacks preferably have a secondary ("backup") capability to service the entire track array (e.g., in case a compansion actuator is disabled or otherwise occupied).

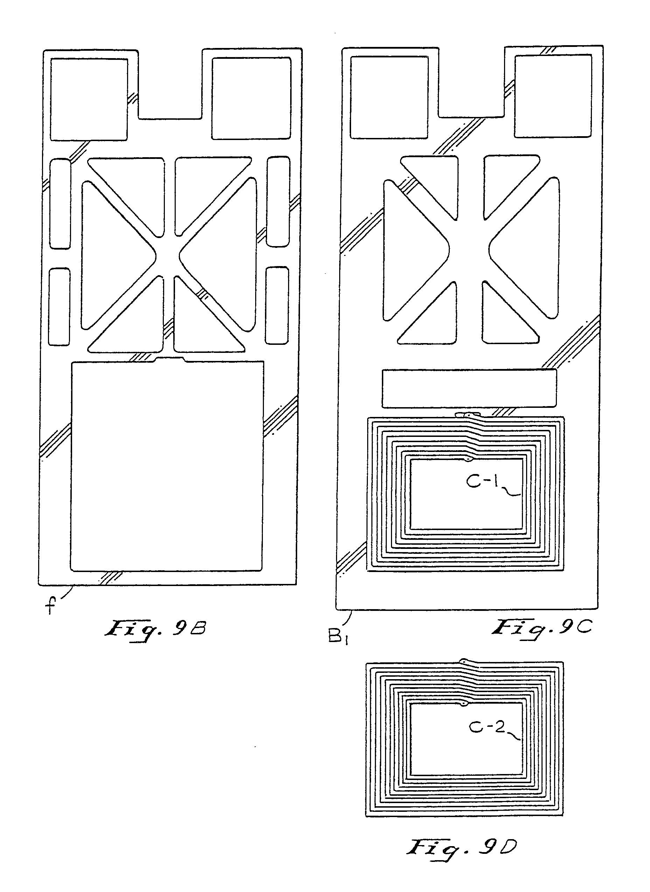

Attention is directed to Figs. 1B—8 (especially Figs. 3 and 4) where an actuator assembly MA according to the invention, is shown. Each stack MA is arranged to provide a stacked module, or array of actuators A-m and associated magnets m and to provide position arm means for an associated set of transducer heads h. Each stack MA will be understood as comprising a prescribed number, of independent actuator strips A-m stacked vertically, each being adapted to be reciprocated along a prescribed carriage-way 1-CV between a respective array 1-g of opposed permanent magnet pairs (see magnets m, Fig. 2) to position associated transducer means h in a respective inter-disk gap. In Fig. 3, four illustrative actuator strips A-m1 to A-m4 are shown by way of example, with their forward, transducer-carrying ends adapted to project respective heads h into the disk stack PK (indicated in phantom and well known in the art).

Figs. 7 and 8 give a perspective and a sectional view respectively of a preferred embodiment of "flat coil" linear positioner A-m in accordance with this invention. Such an embodiment can be considered as comprised of two primary assemblies: the mobile armature-carriage assembly 7-CA essentially including the flat coils C, head mount, roller bearing 7-r and support means; plus the fixed housing and permanent magnet structure 1-g with the magnet shunts 1—2, side 1—1 etc.

As shown in the drawings a magnetic disk memory system, includes a plurality of disks D in a conventional stacked array Pk, arranged in vertical spaced relation with a related stacked array of head assemblies h. Each head assembly h is mounted at the distal end of an armature carriage A-m to be reciprocated back and forth in its disk-gap relative to a respective pair of magnetic recording disk surfaces.

With selective positioning of each head assembly in a conventional manner, the "flat armature" (coil) means provided according to the invention, may be electrically energized to move into a retracted or extended position as known in the art (relative to the associated pair of disk surfaces) and read or record information on any selected track thereof. Thus, the head assemblies h are supported in pairs on actuator strip A-m, to be projected in cantilever fashion as part of a rolling carriage support by rollers 7-r and movable along track rails R. The reciprocating actuator assembly A-m, carrying coil C, is operable when coil C is current-energized in a conventional manner, to move the carriage along the associated cavity 1-CV, toward and away from the disk stack PK between a plurality of precisely located addresses, these addresses, or track positions, determine the position of heads h within the stack in a known manner.

Fig. 4 indicates the opposite (rear) end of the actuators including their flexible connector (head cable) means Cb-1, etc., and associated connections, these being provided conventionally and as known in the art.

For illustration purposes, one such actuator assembly module MA is indicated schematically in Fig. 1B where, for simplicity of illustration, the actuator strips, associated permanent magnets m, etc., are removed, except for magnets m shown in phantom. Actuator array MA is arranged according to the invention to house a prescribed number of identical stacked actuator assemblies (here, four places shown, each assembly being separated by a prescribed metal shield-support or partition 1-p, 1-p', 1-p''). Array MA is peripherally defined by a pair of metal sides 1—1, 1—1' connected and closed by a pair of (upper and lower) magnetic shunt plates (1—2, 1—2' respectively). Shunts 1—2, 1—2' are preferably comprised of cold rolled steel or other low reluctance material so as to offer a low resistance magnetic (shunt) return path for actuator flux.

The inner portions of sides 1—1, 1—1' are cutout to form slots 1-CV, etc., or elongate linear grooves for receiving guide rails (see rails R in Fig. 8); these rails, in turn, to be engaged by a respective pair of roller assemblies 7-r projecting from frame A-m — as indicated in more detail in the sectional view of Fig. 8, and the perspective of Fig. 7, for instance. The structure MA is preferably formed in a standard module with a prescribed standard height, width and length (H, W, L respectively), such that these actuators may be stacked vertically. Thus, where a larger array of actuators is desired, the appropriate number of such modules may be added on, being stacked adjacent their associated gaps, (the number of compartments per stage is optional.

As detailed in Figs. 5, 6 and 7, each actuator strip A-m includes two double roller assemblies 7-r on each side thereof (or two such opposed by a single third roller as an option, see Fig. 7). These dual opposed wheels are adapted, as known in the art, to engage a respective guide rail R as indicated in Fig. 8, in rolling contact when the assembly A-m is translated along its elongate axis (in moving head assembly h relative to track addresses on a respective pair of disks D as well known in the art). Each actuator strip A-m is adapted to be so-reciprocated along a respective actuator cavity 1-CV between opposed sets of permanent magnet poles m (here, four such pole pairs are shown in Fig. 6 at P-1/P-1'; P-2/P-2'; P-3/P-3'; P-4/P-4'; see also Fig. 2 where four such actuator strips A-m1 through A-m4 are illustrated schematically as apt for reciprocation, when energized, along the strip's axis and between opposed sets of pole pairs).

Figs. 5—7 also illustrate details of such a flat coil actuator strip A-m where, according to various further features of novelty, the strip is formed into a relatively thin, light-weight, planar body and is adapted to receive flat coil windings; (—preferably as a printed circuit board PCB, with two or more flat, overlapped coils C printed thereon). Electronic circuit means e is also preferably mounted on each strip A-m at the designer's option, (e.g., read/write electronics for the associated actuator).

Such a "flat armature" A-m will be understood to comprise a "planar trolley" carrying read/write heads h at its distal end and mounted on bearings to be reciprocated freely along a track between upper and lower relatively flat opposing pole pairs. The arrangement of magnets and housing, including magnet shunts 1—2, 1—2' (Figures 1B and 2) will be understood as forming a "closed" flux loop (return path) as mentioned. Here, as opposed to a VC motor, the flux return path will be seen as defined by the walls 1—1 and the shunts 1—2 in a magnetic circuit to minimise leakage flux external to the assembly MA and not undefined or substantially provided by leakage flux through the air as with a VC motor, lying principally across the working gap, so that return flux participates as working flux. This design dispenses with the tubular bobbin and helical coils of a VCM — in favor of the flat mandrel or support on which the several flat conductor loops are placed. These loops will comprise one or several turns (preferably eight coils of eleven turns each and staggered with a 1.59 cm pitch, as indicated in Figs. 9A—9F — these loops comprising a moving coil through which the activating current passes to generate the "working flux" which moves the unit.

The operation of such a novel, "flat coil" (flat armature) actuator will be apparent to those skilled in the art; that is, the motor or linear positioner so formed will be understood as comprised of four flat plates (PC boards) supporting eight flat overlapped coils C with the head h and associated electronics e mounted at the front end of board A-m, and with bearings and associated rollers supporting the board edge for movement along respective rails. In operation, only one of the two overlapped coil-sets is energized at one time. Each coil set, when current is applied, interacts with four adjacent surrounding magnets (of the eight-magnet assembly see also Fig. 9AB). The magnets provide alternating flux in the air gap between themselves and the coil turns, such that a coil's "front" wire experiences flux that is directed oppositely to that experienced by its "back" wire. Thus, as the coil moves it will reach the boundaries of the flux area covered by these four driving magnets — at which time the second coil is enabled and takes over using the same four magnets. This action will be understood as providing a capability for "stepping" the flat coil actuator through the magnet assembly while still keeping a 'linear region" associated with each step (Note: when such a coil is energized it moves in some direction until it reaches a "magnetic boundary"; then if the current is reversed, the coil moves in the opposite direction until reaching another "magnetic boundary" — the distance between these boundaries is the "linear mode region").

Thus, for a typical disk stack with a typical inter-disk spacing or gap $g_d$ (See Fig. 6) of about 1 cm and with one such "flat-coil" actuator arrangement servicing each inter-disk spacing, the performance and dimensional constraints for practical, optimal head translation are readily accommodated. (E.g., in one embodiment using 1.5 mm PC board with 0.5 mm copper clad coils, and assuming inner gap clearance of about 2.5 mm fast translation was seen. — Note above that the magnet poles P may, for instance, be formed of 1.3 cm thick ferrite, having a permeance coefficient of about 2.8; while shunts 1—2, 1—2' can be 1 cm cold rolled steel, with supporting plates 1-p, etc., comprising non-magnetic 1.5 mm steel sheet.) The coils are preferably "overlapped" as illustrated.

The working excursion of this actuator (Fig. 6) should be viewed as:

1. from extreme left (c-1, c-1' in phantom) across P-1/P-1' to P-2/P-2' with coils c-1, c-1' working;

2. then, as coils c-2, c-2' (oppositely poled from c-1, c-1') start to sweep across P-2/P-2'—P-3/P-3'

Except as particularized, workers will understand that the foregoing elements are constructed and operated as known in the art (e.g., as specified in the cited references).

As is evident from the above (see Fig. 2 especially) this "flat armature" concept facilitates the use of one, or more, transducer assemblies per recording surface (pair). The evident reduction in actuator mass, cost, power etc., will obviously encourage this. And workers will readily see advantages in such an "actuator-per-disk" array. For instance, no longer is it necessary to translate a heavy multi-transducer load, servicing "n" pairs of record surfaces, to shift one head on one surface! Also, while a first head is transducing, one (or several) other may, the-while, be shifted to a new address — thus avoiding wasted "access time" when the other head begins transducing (and the first ends).

This, in turn, facilitates a "multiple path to data" concept, whereby some, or all, tracks may be serviced by more than one head, and by more than one associated actuator — preferably having two heads per surface.

Such a "multi-ported" disk file concept is very schematically illustrated in Fig. 17, wherein one illustrative disk $D_n$ in a stack is shown to be comprised of 150 recording tracks — $t_1$, $t_{50}$, $t_{100}$ and $t_{150}$ being shown, in phantom, for illustration purposes. Certain groups of these tracks are to be serviced by a respective one of a trio of transducer heads $h_1$, $h_2$ and $h_3$, the heads to be actuated and controlled by appropriate mechanisms as known in the art (not shown here — it being understood that each of the disks D in a subject stack would be similarly provided).

Now, as indicated by the solid arrows, head $h_1$ is arranged to primarily service tracks $t_1$—$t_{50}$ (being positioned closely adjacent this group of tracks and normally reciprocated only across them — however being also adapted to be further translated to service tracks $t_{50}$—$t_{100}$ as a "backup" transducer. In a similar manner, head $h_2$ is disposed to primarily service tracks $t_{50}$—$t_{100}$, as well as arranged to also service $t_1$—$t_{50}$ as a "backup" to $h_1$ (and/or $t_{100}$—$t_{150}$; likewise head $h_3$ is adapted to principally service tracks $t_{100}$—$t_{150}$, while also optionally covering tracks $t_{50}$—$t_{100}$ (and/or $t_1$—$t_{50}$) as a "backup" head.

Thus, data along any particular track will have at least one alternate "port" (for data input/output), or transducer head arrangement for servicing it in case its primary transducer is unavailable (e.g., being busy elsewhere or damaged and inoperative, etc.). Thus, for example, head $h_1$ might be transducing on track $t_{49}$ and the current program call for track $t_{47}$ to be transduced next — in which case an optimized program could call head $h_2$ into service for this rather than head $h_1$ (assuming head $h_2$ was not otherwise occupied and was then available); thus head $h_2$ would be translated to track $t_{47}$ during the time $h_1$ was transducing on $t_{49}$. Quite evidently this would avoid the "dead time" that would have resulted if head $h_1$ were used to service both tracks (avoid need to suspend data processing and input/output while $h_1$ was translated from $t_{49}$ to $t_{47}$). Workers will, of course, conceive of many other instances in which such "multi-head servicing" of data tracks is particularly advantageous. Also, it will be apparent that the aforementioned "flat armature" design for transducer-actuators is particularly apt for providing this.

The formation and operation of flat coil armatures is illustrated in Figs. 7, 9A—9F and 9AA, 9AB:

A preferred construction and mode of assembly for flat coil armature embodiment A-m in Fig. 7 is indicated in a form of a layup in exploded view in Fig. 9A, with the several parts thereof being indicated in Figs. 9B, 9C, 9D, 9E and 9F, while an operational representation is indicated in Figs. 9AA and 9AB, Fig. 9AB also illustrating the preferred coil offset or overlapped relation.

More particularly, in Figs. 9A and 9B will be seen an upper view of the frame f (of epoxy-glass, about 1.5 cm thick) to which the PC boards, coils C-1, C-2, C-3, rollers 7-r and connectors etc., are to be attached (or a non-ferrous metal may be used, preferably with all "rings" gapped with a dielectric). The structure and operation of these and other parts described will be understood as conventional, except as otherwise described. Frame f will be seen to be cut-off along its cross-section wherever possible (wherever the necessary rigidity and cross-sectional strength admit). A pair of PC boards, $B_1$, $B_2$ are to be placed respectively above and below frame f, each board carrying two pair of flat printed-circuit "overlapping" coils C (one on its top, the other on its bottom face) in opposed offset relation (though this is optional). That is dual-coils C-1, C-2 are disposed on the top and bottom of upper board $B_1$ and coils C-4, C-3 disposed atop and below the bottom PC board $B_2$. Opposed pairs of rollers 7-r (bearings) support the frame for rolling reciprocation. A conventional head assembly (pair) is carried (not shown) along with associated electronics (Fig. 7) (e.g., see R/W chip 7-5). Flexible cables 7-3 couple the structure electrically to the outside and may include return-spring means.

In operation, and as very generally indicated in Fig. 9AA, each such flat coil C (only one coil shown for simplicity) will preferably comprise a multi-turn printed circuit exhibiting a rather advantageous mode of interaction with adjacent magnetic flux (intersecting the coin turns and emanating preferably from sets of surrounding permanent magnet poles as indicated in Fig. 9AB and elsewhere). Thus, once an energizing voltage $V_c$ is applied across the terminals to coil C, current will flow in the directions indicated by the arrows, and, with oppositely directed flux Ø (indicated as $Ø_+$ and $Ø_-$ in Fig. 9AA), the actuation impulses will be additive, tending to thrust the overall structure f unidirectionally as indicated by arrow aa.

This is indicated rather diagrammatically in Fig. 9AB, where a flat coil armature A-m of the type described in the above embodiment, is shown very schematically and in cross-section. Here, A-m includes a pair of opposed-offset coils C-1, C-2 disposed on opposite sides of a supporting board. Coils C-1, C-2 are identical and shown in schematic operative relation with a linear array of opposed permanent magnet pole pairs of the indicated polarity (see arrows). Each coil has an inner diameter $(C_{1D})$ approximating the common length $(P_L)$ of any pole along the translation path (arrows aa), less a coil width $(C_w)$ — i.e. $C_{1D} = P_L - C_w$. The pole pairs should be an even number and may, advantageously, extend virtually any distance with such a construction — a decided advantage over conventional actuators such as a VCM. Low reluctance shunt caps 1-P, 1-P', (e.g., of steel) help close the flux paths efficiently, minimizing the in-air flux-paths.

In an example of operation shown in Fig. 9AB, coil C-2 may be assumed initially to be energized with a certain drive current $(+i_d)$ to begin translating armature A-m in the direction of arrow aa. When coil C-1 passes beyond poles P-1, P-1', and reach position C'-1, or before, it is ready to take over the translation of the armature A-m. The current $(+i_d)$ to coil C-2 is, therefore, terminated and an opposite-polarity current $(-i_d)$ is sent through C-1 for the translation of the armature A-m through the range where C-1 passes pole P-2, P-2'. Coil C-2 is then ready to take over the translation of the armature A-m. Current supply to the coil C-1 is therefore terminated and provided instead to coil C-2. The alternation of current supply to the coils C-1, C-2 is continued until the armature A-m reaches the end of this excursion (indicated here as the position of C''-1, C''-2 — however, if a reduced force constant (g/Amp) is acceptable, the excursion may be extended somewhat in both directions beyond the indicated range of one of the ends of each coil C-1, C-2 to extend outside of any pole P-1, P-1', as workers know).

Workers will recognize many features of novelty in such as "flat linear actuator"; for instance, its thin planar cross-section (tailored to disk gap dimensions), the aligned magnet pairs, the overlapping coils.

Such a "flat armature" (printed circuit) actuator will be seen as advantageous by those skilled in the art, whether developed according to the above described embodiment or in a different related manner according to the subject teaching. Such a "flat actuator" is obviously apt for use in a "multi-actuator" array, with a plurality of actuators (and heads) available for each disk surface (or pair thereof) — i.e., with a plurality available per track as a preferable option. Such a "flat actuator" lends itself readily to the "multi-actuator" concept (e.g., as suggested in Fig. 1A) especially as opposed to existing designs.

As a qualitative example of the kind of results that can be achieved, consider Fig. 10, a plot actuator force vs. head position for an actuator using 2.0 ampere excitation current.

NOTE: a translational force of 250 to 300 grams is quickly developed and sustained to be relatively constant over a translation excursion of about 0.8 cm to 3.3 cm — the next cycle beginning about 3.8 cm wherein the second set of coils takes over.

Fig. 12 depicts, very schematically, a relatively conventional cylindrical solenoid 15-M (of the VC-M type, as in Fig. 11 also) comprising a permanent magnet source of magnetic flux comprised of a cylindrical, or semi-cylindrical, shell 15-1, and an inner core 15-2, core 15-2 being encircled by a moving solenoid coil 15-4. Coil 15-4 will be recognized as conventionally translated along core 15-2 when energized with current (due to inductive interaction with the magnetic flux — see arrows emanating between core 15-2 and peripheral magnet parts 15-1). Force arrow F indicates the resultant reciprocal translation forces so developed — the force direction being determined by direction of current through coil 15-4, as well known in the art.

The magnetic flux field set-up by coil current will flow mainly through the "path of least reluctance" (as indicated by flux loops 15-3 through magnet 15-M). It have found that "flat armature actuators" of the type described above operate somewhat differently. As indicated rather diagrammatically in Fig. 13, one may, simplistically, consider such "flat-armature" devices as comprised of a flat coil CCL (any number of turns) arranged to be energized and movable along a path between opposed magnet pairs, such as pairs A, B and C, in line. (Loop CCL here indicated as spanning section B and part of C.) Considering the inductive energy stored in the air gap between these magnet poles, and intersected by the loops of coil CCL, the total energy in the system may be described as the sum of energy across segments A, B and C.

Now, if coil system CCL is moved "Forward" (in the direction indicated by the arrow, to the position CCL', shown in phantom), it will obviously span less of the working cross-sectional flux through segment C, while adding a corresponding amount from segment A, with that through segment B remaining unchanged. Thus, when the volumetric inter-gap flux densities are summed after such an incremental step, it will be found that the new energy is the same.

Hence, one can say that such movement of a "flat coil" armature involves no transfer of energy, unlike the "cylindrical actuators" indicated in Fig. 12 above. Workers will appreciate this advantage.

— Alternate coil configurations; Figs. 14, 15:

Fig. 14 indicates very generally, and in plan view, a pair of opposed-offset (overlapping) coils C—A, C—B, mounted on a "flat armature" A-m and adapted to function in the manner of the above described embodiments. That is, the two opposed "end segments" of coil C—A (see arrows) are shown as relatively directly intersected by the flux of an adjacent pole pair (at this point in the translation cycle); while the end segments of companion coil C—B will intercept little or no such magnetic flux. Thus, one can say that coil C—A is "active", here; while coil C—B is now "quiescent" (during this portion of their excursion cycle). Thereafter, as the coils move and the flux leaves the confines of the C—A segments, it will begin to more directly intersect the end segments of coil C—B — then coil C—A will have turned "quiescent" and coil C—B become "active", to thereby maintain the driving force and continue the translation of armature A-m. Thereafter, upon further coil movement, coil C—A will again turn "active" and C—B "quiescent", etc., etc., as described above.

Workers in the art will perceive that while the "opposed-offset", overlapping printed coil construction indicated in described embodiments is rather advantageous and practical for many applications, there are other ways of implementing this concept and achieving similar results. One such alternate way is defined by claim 9 and (very schematically) indicated in Fig. 15, (in the manner of Fig. 14). Here, a related "flat coil" armature A-m will be understood to include one or several adjacent coil "loops" L-1, L-2 shown for wires CC disposed thereon (as opposed to the "single-loop" coils C—A, C—B in Fig. 14, each of which is drawn about a common perimeter). As indicated in Fig. 15 each such printed circuit wire is to be extended along the actuation direction to define this "Multi-loop" version of such "flat armatures".

Fig. 16 shows coil-coupling variations.

Figs: 16A, 16A' show schematically (perspective and section respectively) a single coil (replicated each side) 2 layer construction wherein the (printed circuit) coils will be understood as "reverse-wound" and through-connected (C-a to C-b) at their centers. Figs. 16B, 16B' are similar and show a variation: a "dual coil" (2 separate coils); single layer assembly wherein C-d and C-e are connected to separate input terminals.

Figs. 16C, 16C' are similar and show another, highly preferred variation: a "dual-coil/4 layer" assembly yielding eight coils effectively and deriving more turns per coil. (C-f through-connected to C-g at center; then C-g to C-m at ends, thence C-m to C-n at centers; and C-h to C-i at centers; thence C-j to C-k at ends, then C-k to C-l at centers).

Fig. 18 shows different magnet arrays.

Fig. 18A shows, schematically a 4 magnet (2 opposed pair) actuator array comparable to that of Fig. 2. Fig. 18B similarly shows an 8-magnet (4 opposed pairs) array comparable to that of Figs. 5 and 6 — both having magnetic keeper plates 1-P, 1-P' as above mentioned for flux conservation.

Fig. 18C shows, schematically, three actuator compartments, each with a 6-magnet array (3 opposed pairs) plus a side-keeper sk for closing the magnetic circuit. Such an "odd pair" configuration is less preferable than "even pairs" (multiples of 4 magnets preferred).

Fig. 18D is another variation comprising (for each actuator) a bi-functional array of magnets: one set of high-performance magnets (e.g., rear-earth/cobalt magnet M—RC) for "normal" fast operations, over a normal excursion; plus a second set of inexpensive, low-performance magnets (e.g., ceramic magnets M—C) for exceptional or emergency operations. For instance; as used in a "dual path-to-data" disk drive, as noted above, such actuators would be understood as normally operating over a short (e.g., 50 track excursion — this defined by high strength expensive magnets M—RC. But for optional occasional use, over an extended stroke (e.g., 100 tracks, when companion actuator is "busy" or "disabled"), the actuator (coils) would travel beyond the region M—RC into that of magnets M—C as well. For such occasional, emergency operations the degraded performance to be expected with magnets M—C (e.g., slower translation) is acceptable, and justified by the cost savings.

— Various actuator-stack configurations; Figs. 19:

Fig. 1B shows schematically, a 4-compartment stack, for four "flat coil" actuator units, with top and bottom flux-shunt plates. Compare the 7-compartment unit of Fig. 19A and the 8-unit array of Fig. 19B and 19C. Fig. 19B really combines two 4-unit modules as in Fig. 1B; but in 19C the (redundant) center shunting plates (mk", mk''') are eliminated, with reduction in height, weight and cost, but no sacrifice in performance.

Workers will appreciate how aptly such flat armature actuators are combined to drive transducer assemblies for disc drive apparatus and the like. In particular it will be appreciated that such actuators function to reduce the size, the weight, the power and the cost of a transducer actuator and increase its speed (acceleration) accordingly — something workers in the art are now fervently awaiting.

The present invention is applicable for providing the positioning required in other forms of recording and/or reproducing systems, such as those in which data is recorded and reproduced optically.

The above examples of possible variations of the present invention are merely illustrative. Accordingly, the present invention is to be considered as including all possible modifications and variations coming within the scope of the invention as defined by the appended claims.

## Claims

1. A magnetic linear actuator assembly (MA) for controlling the position of a plurality of heads (h) to lie at selectable radii on a plurality of discs (D), said assembly comprising an actuator comprising: a planar armature (A-m) for positioning a particular head (h) mounted to move along a linear path; a magnet group (P-1, P-1', P-2, P-2') disposed along said linear path to provide a first magnetic field in a first sense transverse to said linear path in a first region of said linear path and a second magnetic field, in a second sense opposed to said first sense, in a second region of said linear path adjacent to said first region; and a plurality of overlapped flat coils (C) on said armature (A-m) spaced from one another along said linear path and each having their plane parallel to said linear path, each coil (C) having an extent along said linear path equal to the pole pitch between said first and second regions for the current in said each coil (C) to co-operate both with said first magnet field and with said second magnetic field to produce a displacing force in the same direction; where each one out of said plurality of coils (C) on said armature (A-m) is chosen in turn for the provision of current thereto for the amount of force exerted on said armature (A-m) to be independent of the position of said armature (A-m) along said linear path; said assembly being characterised by said plurality of flat coils comprising a pair of flat coils (C) relatively displaced along said linear path; by said actuator, comprising a plurality of said magnet groups (P-1, P-1', P-2, P-2') adjacent to one another along said linear path to provide magnetic fields of alternate senses transverse to said linear path in alternate adjacent regions of said liner path; by said armature (A-m) being translatable along said linear path over an extended range by the repeated application of a control sequence consisting in energising a first coil (C-1) in said pair of coils (C) with electrical current in a first sense to control said armature (A-m) over a first portion of said linear path, energising a second coil (C-2) in said pair of coils (C) with electrical current in said first sense to control said armature (A-m) over a second portion of said linear path adjacent to said first portion, energising said first coil (C-1) with electrical current in a second sense, oppose to said first sense, to control said armature (A-m) over a third portion of said linear path adjacent to said second portion, and energising said second coil (C-2) with electrical current in said second sense to control said armature (A-m) over a fourth portion of said linear path adjacent to said third portion; and by said assembly comprising a plurality of said actuators (A-m) in stacked array each independently operable to positioning a respective particular head (h), said magnetic fields in said first sense assisting one another by being aligned between adjacent ones of said stacked plurality of actuators (A-m) in said array (MA) and said magnetic fields in said second sense also assisting one another by being aligned between adjacent ones of said stacked plurality of actuators (A-m).

2. An assembly (MA) according to claim 1 wherein said plurality of magnet (m) groups (P-1, P-1', P-2, P-2') in said each actuator comprises one or more magnet groups of a first type (M—RC) along said linear path giving a magnetic field of a first strength and one or more magnet groups of a second type (M—C) giving a magnetic field of a second strength less than said first strength for controlling the position of said respective particular head (h) over an accustomed range of radii on a disc (D) when said coils (C-1, C-2) are interactive with said one or more magnet groups of said first type (M—RC) and for controlling the position of said respective particular head over an unaccustomed range of radii on a disc (D) in the event of failure of another head (h) whose accustomed range lies in said unaccustomed range of said respective particular head with a force constant (grams/ampere) less than for said accustomed range of radii with said coils (C-1, C-2) interactive with said one or more magnet groups of said second type (M—C).

3. An assembly (MA) according to claim 1 or claim 2 comprising magnetic shunts (mK, sK) for the external shielding of said array (MA), the balance between the number of said mutually assisting magnetic fields in said first sense and the number of said mutually assisting magnetic fields in said second sense balancing the means flux in said shunts (mK, sK) to be zero to minimise the stray external magnetic field of said array (MA).

4. An assembly (MA) according to any of the preceding claims, wherein each of said plurality of coils (C) in said each armature (A-m) is disposed on a printed circuit board (B), said each armature (A-m) comprising a plurality of said printed circuit boards (B) on a common frame (f).

5. An assembly (MA) according to any of the preceding claims, wherein each one of said plurality of coils (C) on said each one of said armatures (A-m) comprises a connector ($cb_1$, $cb_3$) for its permanent connection to an external drive circuit.

6. An assembly (MA) according to any of the preceding claims, wherein said each armature (A-

m) is adapted to support an electronic module (e) for said head of heads (h).

7. An assembly (MA) according to any of the preceding claims, wherein said first coil (C-1, C-1') lies on a first side of a board (B) in said each armature (A-m) and wherein said second coil (C-2, C-2') lies on a second side of said board (B).

8. An assembly (MA) according to any of claims 1—8 wherein each said coils (C) in said each armature (A-m) comprises a first portion (c—a, c—f) on a first side of a board (B) and a second portion (c—b, c—g) on a second side of a board (B).

9. An assembly (MA) according to any of claims 1—8 wherein said each armature (A-m) comprises a coil (cc) having a first portion for circulating current about a first portion (L-1) of said armature (A-m) to interact with a first magnet group (P-1, P-1', P-2, P-2') and a second portion for circulating current around a second portion of said armature (L-2) simultaneously to interact with a second magnet group (P-1, P-1', P-2, P-2'), said first and second portions of said coil (cc) being coupled in series for the circulation of current around a third portion of said armature (A-m) intermediate between said first and second portions (L-1, L-2) of said armature (A-m) for further assistive interaction with opposed magnetic fields between said first and second magnet groups (P-1, P-1', P-2, P-2').

10. An assembly (MA) according to any of the preceding claims, for use in conjunction with one or more like assemblies (MA) circumferentially disposed on a common set (PF) of discs (D) for accessing a commong set of tracks (tr).

11. An assembly (MA) according to claim 10 when dependent upon claim 2 wherein said each armature (A-m) is operative to control the position of said respective particular head (h) over an unaccustomed range of radii forming the accustomed range of radii for an armature (A-m) in said one or more like assemblies (MA).

**Patentansprüche**

1. Magnetische, lineare Stellantriebsanordnung (MA) zur Steuerung der Position mehrerer Magnetköpfe (h) über wählbare Radien mehrerer Platten (D), wobei die Anordnung einen Stellantrieb enthält mit: einem ebenen Anker (A-m) zum Positionieren eines bestimmten Magnetkopfes (h), der entlang eines linearen Pfades bewegbar angeordnet ist; einer Magnetgruppe (P-1, P-1', P-2, P-2'), die entlang des linearen Pfades angeordnet ist und ein erstes Magnetfeld in einem ersten Richtungssinn senkrecht zum linearen Pfad in einem ersten Bereich des linearen Pfades und eine zweites Magnetfeld in einem zweiten Richtungssinn entgegengesetzt zum ersten Richtungssinn in einem zweiten Bereich des linearen Pfades neben dem ersten Bereich ausbildet; und mit mehreren, sich überlappenden flachen Spulen (C) auf dem Anker (A-m), die voneinander getrennt auf dem linearen Pfad angeordnet sind und deren Ebene jeweils parallel zu linearen Pfad ausgerichtet ist, wobei die Größe jeder Spule (C) entlang des linearen Pfades gleich der Polteilung zwischen dem ersten und zweiten Bereich für den Strom in jeder Spule (C) ist, um sowohl zu dem ersten Magnetfeld als auch zu dem zweiten Magnetfeld beizutragen und eine Verstellkraft in derselben Richtung hervorzurufen; wobei jede der mehreren Spulen (C) auf dem Anker (A-m) der Reihe nach zur Stromabgabe für den Betrag der auf den Anker (A-m) ausgeübten Kraft unabhängig von der Stellung des Ankers (A-m) entlang des linearen Pfades angesteuert wird, dadurch gekennzeichnet, daß die mehreren Flachspulen ein Paar Flachspulen (C) aufweisen, das relativ entlang des linearen Pfades versetzt ist, daß der Stellantrieb mehrere zueinander benachbarte Magnetgruppen (P-1, P-1', P-2, P-2') entlang des linearen Pfades enthält, die magnetische Felder mit wechselndem Richtungssinn senkrecht zum linearen Pfad in abwechselnd benachbarten Regionen des linearen Pfades vorsehen; daß der Anker (A-m) entlang des linearen Pfades über einen ausgedehnten Bereich mittels wiederholten Anlegens einer Steuersequenz versetzbar ist, die in einem Erregen einer ersten Spule (C-1) des Spulenpaares (C) mit einem in einem ersten Richtungssinn fließenden Strom zur Steuerung des Ankers (A-m) über einen ersten Abschnitt des linearen Pfades, der Erregung einer zweiten Spule (C-2) des Spulenpaares (C) mit einem in der ersten Richtung fließenden Strom zur Steuerung des Ankers (A-m) über einen zweiten Abschnitt des linearen Pfades neben dem ersten Abschnitt, der Erregung der ersten Spule (C-1) mit einem in einer zweiten Richtung entgegengesetzt zum ersten Richtungssinn fließenden elektrischen Strom zur Steuerung des Ankers (A-m) über einen dritten Abschnitt des linearen Pfades benachbart zum zweiten Abschnitt und der Erregung der zweiten Spule (C-2) mit einem elektrischen Strom in dem zweiten Richtungssinn zur Steuerung des Ankers (A-m) über einen vierten Abschnitt des linearen Pfades neben dem ersten Abschnitt besteht; und daß die Anordnung mehrere der Stellantriebe (A-m) in Stapelanordnung enthält, von der jede unabhängig zum Positionieren eines entsprechend zugeordneten Magnetkopfes (h) betätigbar ist, wobei sich die Magnetfelder in der ersten Richtung unterstützen, indem sie sich zwischen benachbarten Stellantrieben der gestapelten mehreren Stellantriebe (A-m) in der Anordnung (MA) unterstützen und wobei sich die Magnetfelder im zweiten Richtungssinn ebenfalls durch Ausrichtung zwischen benachbarten der gestapelten mehreren Stellantriebe (A-m) unterstützen.

2. Stellantribesanordnung (MA) nach Anspruch 1, dadurch gekennzeichnet, daß die mehreren Magnetgruppen (P—1, P—1', P—2, P—2') in jedem der Stellantriebe eine oder mehrere Magnetgruppen eines ersten Typs (M—RC) entlang des linearen Pfades, die ein Magnetfeld mit einer ersten Stärke abgeben, und eine oder mehrere Magnetgruppen eines zweiten Typs (M—C) enthalten, die ein Magnetfeld einer zweiten Stärke abgeben, das geringer als die erste Stärke ist, um die Position des speziellen Magnetkopfes (h) über einen gewohnten Radienbereich auf einer Platte, (D) zur steuern, wenn die Spulen (C-1, C-2) mit der einen oder den mehreren Magnetgruppen des ersten Typs (M—RC) zusammenwirken und um die Position des speziellen Magnetkopfes über einen ungewohnten Radienbereich auf einer Platte (D) für den Fall des Versagens eines anderen Magnetkopfes (h), dessen gewohnter Bereich in dem ungewohnten Bereich des entsprechenden speziellen Magnetkopfes liegt mit einer Kraftkonstante (Gramm/Ampere) zu steuern, die geringer als für den gewohnten Radienbereich ist, wobei die Spulen (C-1, C-2) mit der einer oder den mehreren Magnetgruppen des zweiten Typs (M—C) zusammenwirken.

3. Stellantriebsanordnung (MA) nach Anspruch 1 oder 2, gekennzeichnet durch magnetische Nebenschlüsse (mK, sK) zum externen Abschirmen der Anordnung (MA), wobei die Differenz zwischen der Anzahl der sich gegenseitig unterstützenden Magnetfelder im ersten Richtungssinn und die Anzahl der sich gegenseitig unterstützenden Magnetfelder im zweiten Richtungssinn den mittleren Fluß in den Nebenschlüssen (mK, sK) auf Null ausgleicht, um das externe magnetische Streufeld der Anordnung (MA) zu minimieren.

4. Stellantriebsanordnung (MA) nach einem der vorstehenden Ansprüche, dadurch gekennzeichnet, daß jede der mehreren Spulen (C) in jedem Anker (A-m) auf einer gedruckten Schaltungsplatine (B) angeordnet ist, wobei jeder Anker (A-m) mehrere der gedruckten Schaltungsplatinen (B) auf einem gemeinsamen Rahmen (f) enthält.

5. Stellantriebsanordnung (MA) nach einem der vorstehenden Ansprüche, dadurch gekennzeichnet, daß jede der mehreren Spulen (C) auf jedem der Anker (A-m) einen Verbinder (cb$_1$, cb$_2$) zur permanenten Verbindung mit einer externen Antriebsschaltung enthält.

6. Stellantriebsanordnung (MA) nach einem der vorstehenden Ansprüche, dadurch gekennzeichnet, daß jeder Anker (A-m) ein elektronisches Modul (e) für den aus Magnetköpfen (h) bestehenden Kopf trägt.

7. Stellantriebsanordnung (MA) nach einem der vorstehenden Ansprüche, dadurch gekennzeichnet, daß die erste Spule (C-1, C-1') auf einer ersten Seite einer Platine (B) in jedem Anker (A-m) liegt und daß die zweite Spule (C-2, C-2') auf einer zweiten Seite der Platine (B) liegt.

8. Stellantriebsanordnung (MA) nach einem der vorstehenden Ansprüche 1 bis 8, dadurch gekennzeichnet, daß jede Spule (C) in jedem Anker (A-m) einen ersten Abschnitt (c-a, c-f) auf einer ersten Seite einer Platine (B) und einen zweiten Abschnitt (c-b, c-g) auf einer zweiten Seite einer Platine (b) enthält.

9. Stellantriebsanordnung (MA) nach einem der vorstehenden Ansprüche 1 bis 8, dadurch gekennzeichnet, daß jeder Anker (A-m) eine Spule (cc) enthält, die einen ersten Abschnitt zum Zirkulieren eines Stromes um einen ersten Abschnitt (L-1) des Ankers (A-m) zum Zusammenwirken mit einer ersten Magnetgruppe (P-1, P-1', P-2, P-2') und einen zeiten Abschnitt zum Zirkulieren des Stromes um einen zweiten Abschnitt (L-2) des Ankers (A-m) enthält, um gleichzeitig mit einer zweiten Magnetgruppe (P-1, P-1', P-2, P-2') zusammenzuwirken, wobei der erste und zweite Abschnitt der Spule (cc) in Reihe geschaltet sind, damit der Strom um einen dritten Abschnitt des Ankers (A-m) zwischen dem ersten und zweiten Abschnitt (L-1, L-2) des Ankers (A-m) zum weiteren unterstützenden Zusammenwirken mit gegenüberliegenden Magnetfeldern zwischen den ersten und zweiten Magnetgruppen (P-1, P-1', P-2, P-2') zirkuliert.

10. Stellantriebsanordnung (MA) nach einem der vorstehenden Ansprüche, zur Verwendung in Verbindung mit einer oder mehreren gleichen Anordnung (MA), die rund um einen gemeinsamen Satz (PK) von Platten (D) zum Zugriff auf einen gemeinsamen Satz von Spuren (tr) angeordnet sind.

11. Stellantriebsanordnung (MA) nach Anspruch 10 in Abhängigkeit von Anspruch 2, dadurch gekennzeichnet, daß jeder Anker (A-m) die Position des entsprechenden speziellen Magnetkopfes (h) über einen ungewohnten Radienbereich steuert, der den gewohnten Radienbereich eines Ankers (A-m) in der einen oder den mehreren gleichen Anordnungen (MA) bildet.

**Revendications**

1. Dispositif actionneur linéaire magnétique (MA) pour commander la position d'un ensemble de têtes (h) afin de les mettre sur des rayons choisis sur un ensemble de disques (D), ce dispositif comportant un organe d'actionnement composé d'une armature plate (A-m) pour positionner une tête particulière (h) mobile suivant un chemin linéaire; un groupe d'aimants (P-1, P-1', P-2, P-2') placés le long de ce chemin linéaire pour créer un premier champ magnétique dans un premier sens en travers du chemin linéaire dans la première région de ce chemin linéaire et un second champ magnétique dans un second sens opposé au premier sens dans une seconde région du chemin linéaire voisine de la première région et un ensemble d'enroulement plats, (C) qui se chevauchent sur l'armature (A-m), enroulements espacés les uns des autres suivant un chemin linéaire et chacun ayant son plan parallèle au chemin linéaire, chaque enroulement (C) s'étendant le long du chemin linéaire sur une distance égale au pas polaire entre la première et la seconde région pour que le courant dans chaque enroulement (C) coopère à la fois avec le premier champ magnétique et le second champ magnétique et crée une force de déplacement dans la même direction; chacun parmi l'ensemble des enroulements (C) de l'aramature (A-m) étant choisi à son tour pour que le courant qui le traverse exerce sur l'armature (A-m) une force indépendante de la position de cette armature (A-m) le long de ce chemin linéaire; ce dispositif étant caractérisé par un ensemble d'enroulements plats formés par une paire d'enroulements plats (C) décalés de manière relative le long du chemin linéaire, l'organe d'actionnement comprenant un ensemble de groupes d'aimants (P-1, P-1', P-2, P-2') au voisinage l'un de l'autre suivant le chemin linéaire pour créer des champs magnétiques de sens alterné en travers du chemin linéaire dans les régions adjacentes, alternées du chemin linéaire pour translater l'armature (A-m) le long de ce chemin linéaire sur une distance étendue par l'application répétée d'une séquence de commande consistant à alimenter un premier enroulement (C-1) de la paire d'enroulements (C) avec un courant électrique dans un premier sens pour commander l'armature (A-m) sur une première partie du chemin linéaire, à alimenter un second enroulement (C-2) de cette paire d'enroulement (C) avec un courant électrique dans le premier sens pour commander l'armature (A-m) sur une seconde partie du chemin linéaire adjacente à la première partie, à alimenter le premier enroulement (C-1) avec un courant électrique dans un second sens opposé au premier sens pour commander l'armature (A-m) sur une troisième partie du chemin linéaire adjacente à la seconde partie et à alimenter le second enroulement (C-2) en courant électrique suivant un second sens pour commander l'armature (A-m) sur une quatrième partie du chemin linéaire adjacente à la troisième partie, et ce dispositif comportant un ensemble d'organes d'actionnement (A-m) suivant une répartition empilée, chacun étant susceptible d'être mis en oeuvre indépendamment pour positionner une tête particulière respective (h), ces champs magnétiques dans le premier sens coopérant l'un avec l'autre en étant alignés entre les ensembles adjacents empilés d'organes d'actionnement (A-m) de cette répartition (MA) et les champs magnétiques dans le second coopèrent également l'un avec l'autre en étant alignés entre les ensembles empilés adjacents d'organes d'actionnement (A-m).

2. Dispositif (MA) selon la revendication 1, caractérisé en ce que l'ensemble d'aimants (m) des groupes (P-1, P-1', P-2, P-2') de chaque organe d'actionnement se composant d'un ou plusieurs groupes d'aimants d'un premier type (M—RC) suivant le chemin linéaire donnant un champ magnétique d'une première intensité et un ou plusieurs groupes d'aimants d'un second type (M—C) donnant un champ magnétique d'une seconde intensité inférieure à la première intensité pour commander la position de la tête particulière respective (h) sur une plage habituelle de rayons du disque (D) lorsque les enroulements (C-1, C2), coopèrent avec un ou plusieurs groupes d'aimants du premier type (M—C) et pour commander la position de la tête particulière respective sur une plage inhabituelle de rayons du disque (D) en cas de défaillance d'une autre tête (h) dont la plage habituelle correspond à cette plage inhabituelle de la tête particulière respective, avec une force constante (grammes/ampère) inférieure à la plage habituelle de rayons des enroulements (C-1, C-2) coopérant avec un ou plusieurs groupes d'aimants du second type (M—C).

3. Dispositif (MA) selon la revendication 1 ou la revendication 2 caractérisé en ce qu'il comporte des shunts magnétiques (mK, sK) pour protéger vers l'extérieur le réseau (MA), l'équilibre entre le nombre d'écrans magnétiques coopérant mutuellement dans le premier sens et le nombre des champs magnétiques coopérant mutuellement dans le sens sens équilibrant le flux moyens dans les shunts (mK, sK) à zéro pour réduire au minimum le champ magnétique externe parasite du réseau (MA).

4. Dispositif (MA) selon l'une quelconque des revendications précédentes, caractérisé en ce que chacun des ensembles d'enroulements (C) de chaque armature (A-m) est placé sur une plaque de circuit imprimé (B), chaque armature (A-m) comportant un ensemble de plaques de circuit imprimé (B) sur un châssis commun (f).

5. Dispositif (MA) selon l'une quelconque des revendications précédentes, caractérisé en ce qu'un des différents enroulements (C) de chacune des armatures (A-m) comporte un connecteur ($cb_1$, $cb_3$) pour son branchement permanent sur un circuit d'entraînement externe.

6. Dispositif (MA) selon l'une quelconque des revendications précédentes, caractérisé en ce que chaque armature (A-m) porte un module électronique (e) pour chacune des têtes (h).

7. Dispositif (MA) selon l'une quelconque des revendications précédentes, caractérisé en ce que le premier enroulement (C-1, C-2) se trouve sur une première face d'une plaque (B) de chaque armature (A-m) et le second enroulement (C-2, C-2') se trouve sur la seconde face de la plaque (B).

8. Dispositif (MA) selon l'une quelconque des revendications 1 à 7, caractérisé en ce que chacun des enroulements (C) de chaque armature (A-m) se compose d'une première partie (c-a, c-f) sur une première face de la plaque (B) et d'une seconde partie (c-b, c-g) sur une seconde face de la plaque (B).

9. Dispositif (MA) selon l'une quelconque des revendications 1 à 8, caractérisé en ce que chaque armature (A-m) se compose d'un enroulement (cc) ayant une première partie pour faire passer le courant sur une première partie (L-1) de l'armature (A-m) et coopérer avec un premier groupe d'aimants (P-1, P-1', P-2, P-2') et une seconde partie pour faire circuler le courant autour d'une seconde partie de l'armature (L-2) simultanément pour coopérer avec un second groupe d'aimants (P-1, P-1', P-2, P-2'), la première et la seconde partie de l'enroulement (cc) étant branchées en série pour faire circuler le courant autour d'une troisième partie de l'armature (A-m) entre la première et la seconde partie (L-1, L-2) de l'armature (A-m) pour coopérer en outre avec les champs magnétiques opposés entre le premier et le second groupe d'aimants (P-1, P-1', P-2, P-2').

10. Dispositif (MA) selon l'une quelconque des revendications précédentes utilisable en liaison avec un ou plusieurs dispositifs (MA) répartis de manière périphérique sur un ensemble commun (PK) de disques (D) pour accéder à un jeu commun de pistes (tr).

11. Dispositif (MA) selon la revendication 10 prise en dépendance avec la revendication 2, caractérisé en ce que chaque armature (A-m) coopère et commande la position de la tête particulière respective (h) sur une plage inhabituelle de rayons formant la plage inhabituelle de rayons pour une armature (A-m) de l'un ou de plusieurs tels dispositifs (MA).

0 039 712

Fig. 1A

Fig. 1B

1

*Fig. 2*

*Fig. 3*

MA

cb₁

cb₃

Fig. 4

7-3

7-CA

7-CO

A-m

7-r

7-r

7-5

7-1

Fig. 7

Fig. 5

Fig. 6

0 039 712

Fig. 8

1-2

1-1

m

1-P'

m

7-1

1-9

m

7-r

R

1-P"

m

Fig. 9-A

*Fig. 9B*

*Fig. 9C*

C-1

B₁

C-2

*Fig. 9D*

$B_2$

C-4

*Fig. 9E*

C-3

*Fig. 9F*

Fig. 9 AA

Fig. 9 AB

Fig. 10

PRIOR ART

Fig. 11

Fig. 12

Fig. 13

Fig. 14

Fig. 15

Fig. 16-A

Fig. 16-A'

Fig. 16-B

Fig. 16-B'

Fig. 16-C

Fig. 16-C'

11

Fig. 17

Fig. 18-A

Fig. 18-B

Fig. 18-C

Fig. 18-D

Fig. 19-A        Fig. 19-B        Fig. 19-C